(19) **Europäisches Patentamt / European Patent Office / Office européen des brevets**

(11) **EP 2 514 969 B1**

(12) **EUROPEAN PATENT SPECIFICATION**

(45) Date of publication and mention of the grant of the patent:
**21.09.2016 Bulletin 2016/38**

(51) Int Cl.:
*F03D 80/50* (2016.01)    *F03D 7/04* (2006.01)

(21) Application number: **12156273.0**

(22) Date of filing: **20.02.2012**

(54) **Monitoring wind turbine performance**

Überwachung der Windturbinenleistung

Surveillance de la performance d'éolienne

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.04.2011 US 201113091987**

(43) Date of publication of application:
**24.10.2012 Bulletin 2012/43**

(73) Proprietor: **Honeywell International Inc.**
**Morris Plains, NJ 07950 (US)**

(72) Inventors:
• **Uluyol, Onder**
  **Morristown, NJ New Jersey 07962-2245 (US)**
• **Parthasarathy, Girija**
  **Morristown, NJ New Jersey 07962-2245 (US)**

(74) Representative: **Houghton, Mark Phillip et al**
**Patent Outsourcing Limited**
**1 King Street**
**Bakewell, Derbyshire DE45 1DZ (GB)**

(56) References cited:
**WO-A1-03/106838**    **US-A1- 2007 183 885**
**US-A1- 2010 082 295**    **US-A1- 2011 020 122**
**US-A1- 2011 224 926**

• **Stijn Donders: "fault detection and identification for wind turbine systems: a closed-loop analysis", , 30 June 2002 (2002-06-30), pages 7-8, XP55022750, Retrieved from the Internet: URL:http://www.stijndonders.nl/wind/script ie.pdf [retrieved on 2012-03-23]**

**Description**

Technical Field

The present disclosure relates to monitoring wind turbine performance.

Government Rights

The subject matter of this disclosure was made with government support under Contract Number DE-EE0001368 awarded by the US Department of Energy. Accordingly, the U.S. Government has certain rights to subject matter disclosed herein.

Background

Wind turbines can be used to harvest energy from the wind. Many wind turbines operate in severe and/or remote environments, which may lead to deterioration of the components of the wind turbine and/or performance degradation of the wind turbine. Accordingly, wind turbines may need frequent maintenance in order to operate properly and effectively.

Maintenance of wind turbines may be performed on a scheduled basis (e.g., at a particular time interval and/or after a particular amount of operation time). However, such scheduled wind turbine maintenance may have low reliability and/or high costs. For example, the wind turbine may be operating properly and effectively (e.g., may not need maintenance) at the scheduled maintenance time, resulting in unnecessary maintenance being performed on the wind turbine at the scheduled maintenance time. As an additional example, if the wind turbine is not operating properly or effectively (e.g., needs maintenance), but the next scheduled maintenance will not occur for a long period of time, a large amount of production time may be lost before the next scheduled maintenance is performed.

Condition based maintenance of wind turbines can have a greater reliability and/or lower cost than scheduled maintenance. Previous condition based maintenance approaches may include, for example, monitoring the performance (e.g., power output) of a wind turbine, and comparing the performance of the wind turbine to an expected performance of the wind turbine. If the performance of the wind turbine deviates from its expected performance, maintenance may be performed.

However, in some instances, the deviation of the performance of the wind turbine from its expected performance may not be due to the wind turbine not operating properly or effectively. That is, the deviation may not be due to maintenance being needed by the wind turbine. Accordingly, such previous condition based maintenance approaches may also result in unnecessary maintenance being performed on the wind turbine.

US2011/020122A1 discloses an integrated condition based maintenance system for wind turbines, in which a computer receives condition information from a plurality of condition detection sensors coupled to a wind turbine and receives wind turbine controller information. An anomaly detection algorithm is applied to identify maintenance activities for the wind turbine as a function of both the wind turbine condition information and the wind turbine controller information.

The present invention provides a computing device for monitoring wind turbine performance, according to claim 1 of the appended claims.

Brief Description of the Drawings

Figure 1 illustrates a system for monitoring wind turbine performance in accordance with one or more embodiments of the present disclosure.

Figure 2 illustrates a method for monitoring wind turbine performance in accordance with one or more embodiments of the present disclosure.

Figure 3 illustrates a method for monitoring wind turbine performance in accordance with one or more embodiments of the present disclosure.

Detailed Description

Monitoring wind turbine performance is described herein. One or more device embodiments include a memory and a processor. The processor is configured to execute executable instructions stored in the memory to determine a number of power outputs of a wind turbine at a number of wind speeds, determine a number of power residuals of the wind turbine at the number of wind speeds based on the determined power outputs and an expected power output curve associated with the wind turbine, adjust the power residuals based on a number of characteristics associated with a location of the wind turbine, analyze performance of the wind turbine based on the adjusted power residuals, and generate and display a number of health indicators associated with the wind turbine.

Monitoring wind turbine performance in accordance with one or more embodiments of the present disclosure can be more reliable and/or less costly than previous scheduled maintenance approaches and previous condition based maintenance approaches. For example, monitoring wind turbine performance in accordance with one or more embodiments of the present disclosure may reduce and/or eliminate occurrences of unnecessary maintenance being performed on the wind turbine (e.g., may reduce and/or eliminate occurrences of maintenance being performed on the wind turbine when the wind turbine does not need maintenance). Additionally, monitoring wind turbine performance in accordance with one or more embodiments of the present disclosure may reduce the delay between when the wind turbine needs maintenance and when the maintenance is performed, thereby reducing the amount of production time that is lost before the maintenance is performed.

In the following detailed description, reference is made to the accompanying drawings that form a part hereof. The drawings show by way of illustration how one or more embodiments of the disclosure may be practiced. These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

The proportion and the relative scale of the elements provided in the figures are intended to illustrate the embodiments of the present disclosure, and should not be taken in a limiting sense.

As used herein, "a" or "a number of" something can refer to one or more such things. For example, "a number of sensors" can refer to one or more sensors. Additionally, the designators "M" and "N" as used herein, particularly with respect to reference numerals in the drawings, indicate that a number of the particular feature so designated can be included with a number of embodiments of the present disclosure.

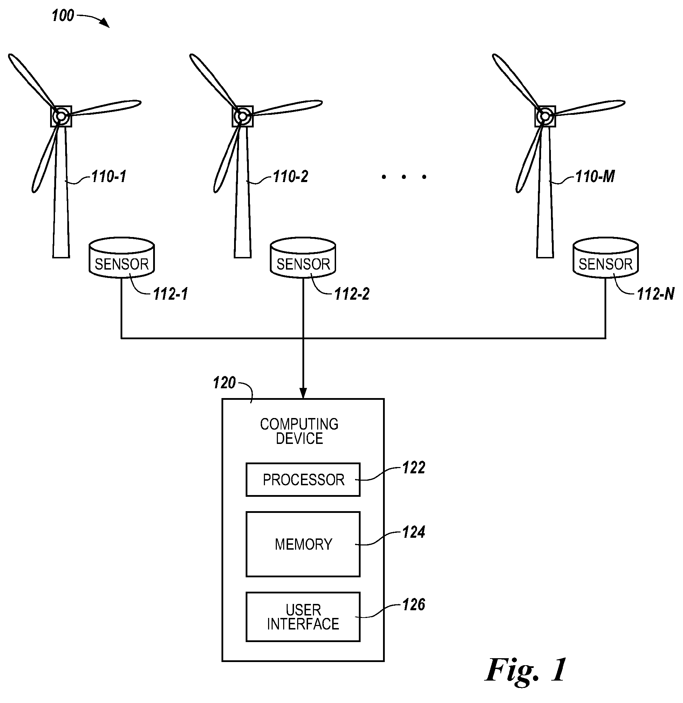

Figure 1 illustrates a system 100 for monitoring wind turbine performance in accordance with one or more embodiments of the present disclosure. As shown in Figure 1, system 100 can include a number of wind turbines 110-1, 110-2, ..., 110-M, a number of sensors 112-1, 112-2, ..., 112-N, and a computing device 120.

Wind turbines 110-1, 110-2, ..., 110-M can be used to harvest energy from the wind at the location of the wind turbines (e.g., the site at which the wind turbines are installed). For example, wind turbines 110-1, 110-2, ..., 110-M can convert kinetic energy from the wind at the location of the wind turbines to electrical energy, as will be understood by one of ordinary skill in the art.

As shown in Figure 1, sensors 112-1, 112-2,..., 112-N can be associated with wind turbines 110-1, 110-2, ..., 110-M. For example, sensors 112-1, 112-2, ..., 112-N can be connected to, located adjacent to, and/or located near wind turbines 110-1, 110-2, ..., 110-M. In the embodiment illustrated in Figure 1, one sensor is associated with each wind turbine. However, embodiments of the present disclosure are not so limited. For example, in some embodiments, more than one sensor can be associated with each wind turbine, and/or one sensor can be associated with more than one wind turbine.

Sensors 112-1, 112-2, ..., 112-N can sense (e.g., detect, measure, collect, and/or record) supervisory control and data acquisition (SCADA) data associated with wind turbines 110-1, 110-2,..., 110-M. For example, sensors 112-1, 112-2, ..., 112-N can sense wind speeds at the location of wind turbines 110-1, 110-2, ..., 110-M, power outputs of the wind turbines (e.g., the amounts of power generated by the wind turbines) at the sensed wind speeds, speeds of the rotors of the wind turbines at the sensed wind speeds, temperatures of the gearboxes of the wind turbines, and/or temperatures and/or currents of the generators of the wind turbines, among other types of SCADA data.

Additionally, sensors 112-1, 112-2, ..., 112-N can sense additional characteristics (e.g., additional data) associated with the location of wind turbines 110-1, 110-2, ..., 110-M (e.g., operating conditions specific to the location of the wind turbines), such as, for instance, terrain and/or meteorological conditions associated with the wind turbines. For example, sensors 112-1, 112-2,..., 112-N can sense the air temperature at the location of wind turbines 110-1, 110-2, ..., 110-M, the air pressure at the location of the wind turbines, the air density at the location of the wind turbines, the altitude of the location of the wind turbines, the wind direction of the wind at the location of the wind turbines, wind shear at the location of the wind turbines, turbulence intensity at the location of the wind turbines, and/or whether the terrain at the location of the wind turbines is complex or benign, among other types of operating conditions specific to the location of the wind turbines.

Sensors 112-1, 112-2, ..., 112-N can send (e.g., transmit) the sensed data (e.g., the sensed SCADA data associated with the wind turbines and the sensed additional data associated with the location of the wind turbines) to computing device 120. That is, computing device 120 can receive the sensed data from sensors 112-1, 112-2, ..., 112-N.

For example, sensors 112-1, 112-2,..., 112-N can send the sensed data to computing device 120 via a wired or wireless network (not shown in Figure 1), such as, for instance, a wide area network (WAN) such as the Internet, a local area network (LAN), a personal area network (PAN), a campus area network (CAN), or metropolitan area network (MAN), among other types of networks. As used herein, a "network" can provide a communication system that directly or indirectly links two or more computers and/or peripheral devices and allows users to access resources on other computing devices and exchange messages with other users. A network can allow users to share resources on their own systems with other network users and to access information on centrally located systems or on systems that are located at remote locations.

A network may provide connections to the Internet and/or to the networks of other entities (e.g., organizations, institutions, etc.). Users may interact with network-enabled software applications to make a network request, such as to get a file or print on a network printer. Applications may also communicate with network management software, which can interact with network hardware to transmit information between devices on the network.

As shown in Figure 1, computing device 120 includes a processor 122 and a memory 124. Although not illustrated in Figure 1, memory 124 can be coupled to processor 122.

Memory 124 can be volatile or nonvolatile memory. Memory 124 can also be removable, e.g., portable memory, or non-removable, e.g., internal memory. For example, memory 124 can be random access memory (RAM) and/or read-only memory (ROM) (e.g., dynamic random access memory (DRAM), electrically erasable programmable read-only memory (EEPROM), flash memory, phase change random access memory (PCRAM), compact-disk read-only memory (CD-ROM)), and/or a laser disk, a digital versatile disk (DVD) or other optical disk storage, and/or a magnetic medium such as magnetic cassettes, tapes, or disks, among other types of memory.

Further, although memory 124 is illustrated as being located in computing device 120, embodiments of the present disclosure are not so limited. For example, memory 124 can be located in a stand alone device and/or can be located internal to another computing resource, e.g., enabling computer readable instructions to be downloaded over the Internet or another type of wired or wireless connection.

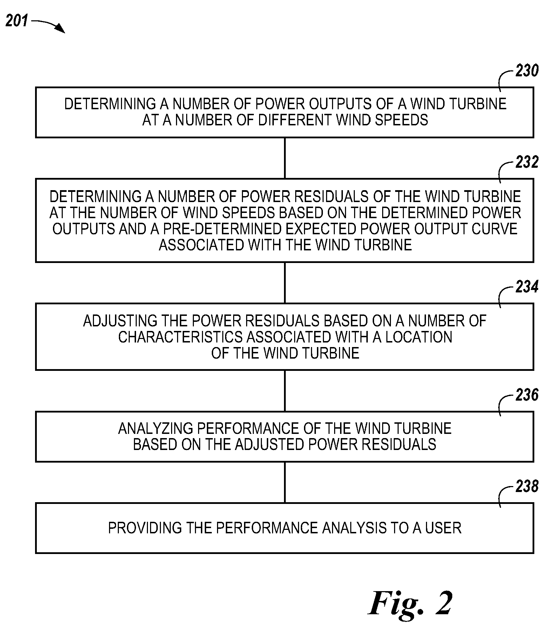

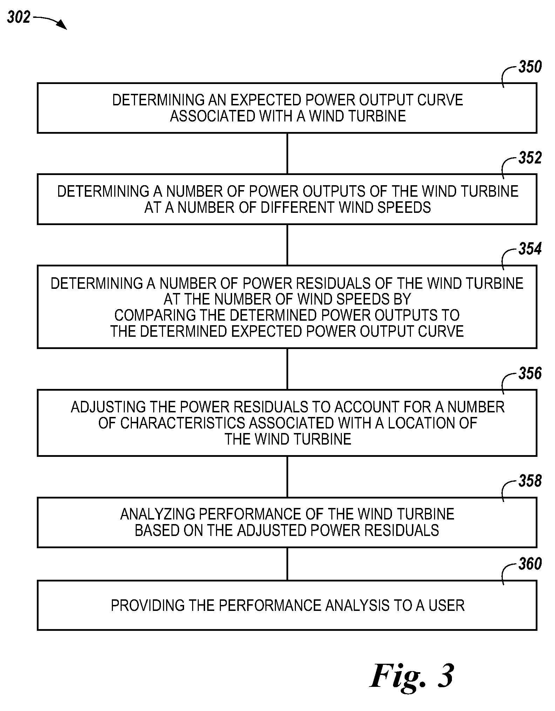

Memory 124 stores executable instructions, such as, for example, computer readable instructions (e.g., software), for monitoring the performance of wind turbines 110-1, 110-2, ..., 110-M (e.g., the performance of the components of the wind turbines and/or the efficiency with which the wind turbines convert wind kinetic energy to electrical energy) in accordance with one or more embodiments of the present disclosure. Processor 122 executes the executable instructions stored in memory 124 to monitor the performance of wind turbines 110-1, 110-2, ..., 110-M in accordance with one or more embodiments of the present disclosure. For example, processor 122 executes the executable instructions stored in memory 124 to monitor the performance of wind turbines 110-1, 110-2, ..., 110-M using the sensed data (e.g., the sensed SCADA data associated with the wind turbines and the sensed additional data associated with the location of the wind turbines) received from sensors 112-1, 112-2, ..., 112-N by computing device 120 and an expected power output curve associated with the wind turbines, as will be further described herein (e.g., in connection with Figures 2 and 3).

As shown in Figure 1, computing device 120 includes a user interface 126. User interface 126 can include, for example, a screen that can provide (e.g., display and/or present) information to a user of computing device 120. For instance, user interface 126 can provide information associated with the performance of wind turbines 110-1, 110-2, ..., 110-M to the user of computing device 120, as will be further described herein (e.g., in connection with Figures 2 and 3). However, embodiments of the present disclosure are not limited to a particular type of user interface.

In some embodiments, computing device 120 can be located at the location (e.g., site) of wind turbines 110-1, 110-2, ..., 110-M. That is, the instructions for monitoring the performance of wind turbines 110-1, 110-2, ..., 110-M in accordance with one or more embodiments of the present disclosure can be deployed at the location of the wind turbines. In some embodiments, computing device 120 can be located remotely from the location of wind turbines 110-1, 110-2, ..., 110-M (e.g., at a different location than the wind turbines). That is, the instructions for monitoring the performance of wind turbines 110-1, 110-2, ..., 110-M in accordance with one or more embodiments of the present disclosure can be deployed remotely from the location of the wind turbines.

Figure 2 illustrates a method 201 for monitoring wind turbine performance in accordance with one or more embodiments of the present disclosure. Method 201 is performed, for example, by computing device 120 previously described in connection with Figure 1 to monitor the performance of (e.g., the performance of the components of) wind turbines 110-1, 110-2, ..., 110-M previously described in connection with Figure 1.

At block 230, method 201 includes determining a number of power outputs of a wind turbine at a number of different wind speeds. The wind turbine can be, for example, one or more of wind turbines 110-1, 110-2, ..., 110-M.

The number of power outputs of the wind turbine can be, for example, the amounts of power generated by the wind turbines at the number of different wind speeds. The power outputs can be sensed, for example, by sensors 112-1, 112-2, ..., 112-N previously described in connection with Figure 1 and sent to computing device 120, as previously described herein.

The power outputs of the wind turbine can be determined over a period of time, such as, for example, three months. For instance, the power outputs of the wind turbine can be determined during a season of the year. However, embodiments of the present disclosure are not limited to a particular period of time in which the power outputs of the wind turbine can be determined. For example, the period of time can be adjusted (e.g., the performance of the wind turbine over different time scales can be monitored). As an example, a longer period of time may allow long-term changes in the performance of the wind turbine (e.g., deterioration of the aerodynamic performance of the rotor blades of the wind turbine) to be monitored, while a shorter period of time may expose symptoms of an impending component failure of the wind turbine.

Further, the power outputs of the wind turbine can be determined at a particular interval during the period of time. For example, the power outputs of the wind turbine may be determined every minute, every ten minutes, or every hour. However, embodiments of the present disclosure are not limited to a particular interval. The interval may depend on, for example, the power output capability of the wind turbine (e.g., the more power the wind turbine can generate, the smaller the interval may be).

At block 232, method 201 includes determining a number of power residuals of the wind turbine at the number of wind speeds based on (e.g. by comparing) the determined power outputs and a pre-determined expected power output curve associated with the wind turbine. The pre-determined expected (e.g., nominal) power output curve can be an indicator of the expected performance of the wind turbine at different wind speeds and a particular air density. That is, the pre-determined expected power output curve is based on (e.g., determined using) a number of expected power outputs associated with the wind turbine at a number of wind speeds and a particular air density, and different points along the curve can provide the expected power output of the wind turbine at different wind speeds and the particular air density.

The pre-determined expected power output curve can be a performance specification provided by the manufacturer of the wind turbine. For example, for specific wind turbine operation, power curves can be derived from non-dimensional power coefficient versus tip speed ratio performance curves of the wind turbine design, and can be established by the wind turbine manufacturer following published guidelines of power performance measurements of electricity producing wind turbines. The power curve can be used to estimate the average energy production at a particular location for a given Rayleigh wind profile and to monitor the power production performance of installed wind turbines.

The pre-determined expected power output curve can be for an operational wind speed range that is between the cut-in speed and the cut-out speed of the wind turbine. The cut-in speed is the wind speed at which the wind turbine begins to generate power, and the cut-out speed is chosen to protect the wind turbine from high loads.

The number of power residuals of the wind turbine at the number of wind speeds can be determined, for example, by subtracting the expected power output of the wind turbine at the number of wind speeds from the determined power outputs of the wind turbine at the number of wind speeds. That is, the number of power residuals can be the difference between the determined power outputs and the expected power outputs (e.g., the deviation of the determined power outputs from the expected power outputs). For example, the power residual of the wind turbine at a particular wind speed can be the difference between the determined power output of the wind turbine at the particular wind speed and the expected power output of the wind turbine at the particular wind speed provided by the pre-determined expected power output curve associated with the wind turbine.

The pre-determined expected power output curve, however, may not account for characteristics associated with the location of the wind turbine (e.g., operating conditions specific to the location of the wind turbines) and/or changes in the condition of the components of the wind turbine. That is, the actual power output of the wind turbine may deviate from the expected power output curve due to characteristics associated with the location of the wind turbine and/or changes in the condition of the components of the wind turbine. Accordingly, at block 234, method 201 includes adjusting the power residuals based on (e.g., to account for) a number of characteristics associated with (e.g., operating conditions specific to) a location of the wind turbine.

The number of characteristics associated with the location of the wind turbine can include, for example, terrain and/or meteorological conditions associated with the wind turbine, such as the air temperature at the location of wind turbine, the air pressure at the location of the wind turbine, the air density at the location of the wind turbine, the altitude of the location of the wind turbine, the wind direction of the wind at the location of the wind turbine, wind shear at the location of the wind turbine, turbulence intensity at the location of the wind turbine, and/or whether the terrain at the location of the wind turbine is complex or benign, among other types of operating conditions specific to the location of the wind turbine. The characteristics associated with the location of the wind turbine can be sensed, for example, by sensors 112-1, 112-2, ..., 112-N previously described in connection with Figure 1 and sent to computing device 120, as previously described herein.

In some embodiments, adjusting the power residuals based on the number of characteristics associated with the location of the wind turbine can include, for example, assigning each power residual to one of a number of data bins (e.g., determining the power residuals for each bin), and determining statistics (e.g., the mean and/or variance) associated with each of the data bins. Each data bin can have a boundary based on wind speed and/or a baseline variation boundary (e.g., a nominal operational boundary that is a multiple of the standard deviation for that bin in baseline data). For example, an n-sigma boundary can indicate the variability of the power residuals in each data bin, which can provide a characterization of the shape of the power residual curve. This can form the basis for generating condition indicators that can separate nominal operation from faulty or deteriorated operation. Such condition indicators will be further described herein.

At block 236, method 201 includes analyzing performance of the wind turbine based on the adjusted power residuals. The performance analysis of the wind turbine can include, for example, determining whether the performance of the wind turbine is degrading (e.g., whether the efficiency with which the wind turbine converts wind kinetic energy to electrical energy is decreasing) and/or whether the performance of the components of the wind turbine is degrading (e.g., whether one or more components of the wind turbine are failing or about to fail). For instance, the performance analysis of the wind turbine can determine that blade aerodynamic degradation is occurring (e.g., due to leading and/or trailing edge losses and/or dirt and/or ice buildup on the blades), power loss is occurring (e.g., due to drivetrain misalignment and/or friction caused by bearing and/or gear faults), pitch control system degradation is occurring, and/or the gear box of the wind turbine is failing, among other types of degradation.

The performance of the wind turbine can be analyzed by, for example, performing a statistical analysis of the adjusted power residuals. The statistical analysis can include, for instance, determining an average (e.g., mean) adjusted power residual at each of the number of wind speeds (e.g., for each wind speed data bin), determining a standard deviation associated with the adjusted power residuals at each of the number of wind speeds. The invention determines a skewness associated with the adjusted power residuals at each of the number of wind speeds, and a kurtosis associated with the adjusted power residuals at each of the number of wind speeds. The skewness can provide a measure of distribution symmetry for each wind speed bin, and the kurtosis can provide a measure of the shape of the distribution for each distribution bin (e.g., of how peaked or flat each distribution bin is).

The performance analysis of the wind turbine includes generating a number of condition indicators and health indicators. The condition indicators can be a measure(s) of the state of the wind turbine, and the health indicators can be a decision and/or conclusion based on the condition indicators. The condition indicators can graphically (e.g., numerically) represent the performance of the wind turbine. For example, the condition indicators can be a graphical representation(s) of the statistical analysis performed on the adjusted power residuals. The health indicators can describe the performance of the wind turbine in words to associated the wind turbine health with Normal or Abnormal (e.g., Anomaly), or to isolate the condition to one or more failure modes. For example, if the statistical analysis performed on the adjusted power residuals indicates the gear box of the wind turbine is failing, the health indicator can be "gear box failure". Health indicators can further post-process the condition indicators and their historical trend to make a decision on the health. For example, if one or more condition indicators have been trending higher or lower than normal, a health indicator may take the history and interaction among condition indicators to make a conclusion of failure or normality.

As an example, in some instances (e.g., when many years of data is not available), the average adjusted power residuals may provide an indication of an anomaly, but may not be able to indicate whether the anomaly can be explained by (e.g., is due to) seasonal variations. However, in such instances and according to the invention, the skewness and kurtosis associated with the adjusted power residuals can indicate whether the anomaly is due to seasonal variations and not performance degradation. For example, the skewness and kurtosis may indicate that the anomaly is not due to seasonal variations (e.g. is due to performance degradation) if they include small variations between seasonal (e.g., quarterly) data sets that are dominated by the indicator curve for the quarter with the failure.

Such an analysis example may be based on lumped data for certain quarters. Diagnostics and/or prognostics may depend on the sensor measurements. For instance, exclusive sensor measurements for particular failure modes can provide more accurate and/or earlier warnings of the failure. Such deviations can be detected by, for example, performing a similar analysis for moving windows having a duration of 30 days, with one day progression intervals. In such an example, the skewness and/or kurtosis associated with the adjusted power residuals in each wind speed bin can provide the approximate day (e.g., a three day window) when the deviation has begun.

At block 238, method 201 includes providing the performance analysis to a user. For example, the number of condition indicators and/or health indicators can be provided to the user. The user can be, for example, a user of computing device 120, and the performance analysis can be provided (e.g., displayed and/or presented) to the user via user interface 126 previously described in connection with Figure 1.

Figure 3 illustrates a method 302 for monitoring wind turbine performance in accordance with one or more embodiments of the present disclosure. Method 302 can be performed, for example, by computing device 120 previously described in connection with Figure 1 to monitor the performance of (e.g., the performance of the components of) wind turbines 110-1, 110-2, ..., 110-M previously described in connection with Figure 1.

At block 350, method 302 includes determining an expected power output curve associated with a wind turbine. The wind turbine can be, for example, one or more of wind turbines 110-1, 110-2, ..., 110-M. In the embodiment illustrated in Figure 3, the expected power output curve may not be a pre-determined power output curve. For example, no power output curve may be available from or provided by the manufacturer of the wind turbine (e.g., the wind turbine may be a refurbished machine or have undergone a number of component and/or control changes).

The determined expected (e.g., nominal) power output curve can be an indicator of the expected performance of the wind turbine at different wind speeds and a particular air density. That is, is the determined expected power output curve can be based on (e.g., determined using) a number of expected power outputs associated with the wind turbine at a number of wind speeds and a particular air density, and different points along the curve can provide the expected power output of the wind turbine at different wind speeds and the particular air density. Further, the determined expected power output curve can be for an operational wind speed range that is between the cut-in speed and the cut-out speed of the wind turbine.

The expected power output curve can be determined by, for example, determining a number of power outputs of the wind turbine (e.g., the amounts of power generated by the wind turbine) at a number of wind speeds over a period of time during which the wind turbine is known to be performing normally (e.g., operating within expected performance parameters and/or generating an expected amount of power), and determining the expected power output curve based on the determined power outputs of the wind turbine over the period of time. The determined power outputs of the wind turbine can be, for example, part of the SCADA data sensed by sensors 112-1, 112-2, ..., 112-N previously described in connection with Figure 1 and sent to computing device 120, as previously described herein. The expected power output curve can be determined (e.g., generated) by, for example, using a data fitting approach, such as, for instance, a polynomial fitting of the determined power outputs of the wind turbine.

In addition to wind speed, the power output of the wind turbine can also additionally depend on the air mass at the location of the turbine. Accordingly, in addition to wind speed, the expected power output curve is additionally based on (e.g., determined using) the air density at the location of the wind turbine. For example, the expected power output curve may be based on an expected power output of the wind turbine at a number of wind speeds and the air density at the location of the turbine. That is, a family of expected power output curves may be determined for different air densities.

The air density at the location of the turbine can be given by:

$$\rho = p/RT$$

where $\rho$ is the air density at the location of the wind turbine in $kg/m^3$, p is the air pressure at the location of the wind turbine in $N/m^2$, R is the specific gas constant (287 J/kgK), and T is the air temperature at the location of the wind turbine in Kelvins. According to the invention, determining the expected power output curve can include as a first option determining an expected power output of the wind turbine at a number of wind speeds based, at least in part, on the air pressure at the location of the air turbine and the air temperature at the location of the wind turbine.

Additionally and/or alternatively, the air density at the location of the turbine can be given by:

$$\rho = (\rho_o/RT) \exp(gz/RT)$$

where $\rho$ is the air density at the location of the wind turbine in $kg/m^3$, $\rho_o$ is the standard sea level atmospheric pressure, R is the specific gas constant (287 J/kgK), T is the air temperature at the location of the wind turbine in Kelvins, and z is the elevation (e.g., altitude) of the location of the wind turbine in meters. According to the invention, determining the expected power output curve can include as a second option determining an expected power output of the wind turbine at a number of wind speeds based, at least in part, on the air temperature at the location of the wind turbine and the elevation of the location of the wind turbine.

At block 352, method 302 includes determining a number of power outputs of the wind turbine at a number of different wind speeds. Block 352 can be analogous to block 230 of method 201 previously described herein in connection with Figure 2.

At block 354, method 302 includes determining a number of power residuals of the wind turbine at the number of wind speeds by comparing the determined power outputs to the determined power output curve. The number of power residuals of the wind turbine at the number of wind speeds can be determined, for example, by subtracting the expected power output of the wind turbine at the number of wind speeds from the determined power outputs of the wind turbine at the number of wind speeds. That is, the number of power residuals can be the difference between the determined power outputs and the expected power outputs (e.g., the deviation of the determined power outputs from the expected power outputs). For example, the power residual of the wind turbine at a particular wind speed can be the difference between the determined power output of the wind turbine at the particular wind speed and the expected power output of the wind turbine at the particular wind speed provided by the determined expected power output curve associated with the wind turbine.

The determined expected power output curve, however, may not account for characteristics associated with the location of the wind turbine (e.g., operating conditions specific to the location of the wind turbines) and/or changes in the condition of the components of the wind turbine. That is, the actual power output of the wind turbine may deviate from the expected power output curve due to characteristics associated with the location of the wind turbine and/or changes in the condition of the components of the wind turbine.

Accordingly, at block 356, method 302 includes adjusting the power residuals to account for a number of characteristics associated with (e.g., operating conditions specific to) a location of the wind turbine. Block 356 can be analogous to block 234 of method 201 previously described herein in connection with Figure 2.

At block 358, method 302 includes analyzing performance of the wind turbine based on the adjusted power residuals, and at block 360 method 302 includes providing the performance analysis to a user. Blocks 358 and 360 can be analogous to blocks 236 and 238, respectively, of method 201 previously described in connection with Figure 2.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

**Claims**

1. A computing device (120) for monitoring wind turbine performance, comprising:

   a memory (124); and
   a processor (122) configured to execute executable instructions stored in the memory (124) to:

   determine a number of power outputs of a wind turbine (110-1, 110-2, ..., 110-M) at a number of wind speeds;
   determine an expected power output curve associated with the wind turbine (110-1, 110-2, ..., 110-M) by determining an expected power output of the wind turbine (110-1, 110-2, ..., 110-M) at the number of wind speeds based, at least in part, on:

   an air pressure at a location of the wind turbine (110-1, 110-2, ..., 110-M) and an air temperature at the location of the wind turbine (110-1, 110-2, ..., 110-m); or:
   an elevation of the location of the wind turbine (110-1, 110-2, ..., 110-M) and the air temperature at the location of the wind turbine (110-1, 110-2, ..., 110-M);

   determine a number of power residuals of the wind turbine (110-1, 110-2, ..., 110-M) at the number of wind speeds based on the determined power outputs and the expected power output curve;
   adjust the power residuals based on a number of characteristics associated with the location of the wind turbine (110-1, 110-2, ..., 110-M);
   analyze performance of the wind turbine (110-1, 110-2, ..., 110-M) based on the adjusted power residuals, wherein the analysis includes determining a skewness and a kurtosis associated with the adjusted power residuals at each of the number of wind speeds to determine whether an anomaly associated with the performance of the wind turbine (110-1, 110-2, ..., 110-M) is due to seasonal variations; and
   generate and display a number of health indicators associated with the wind turbine (110-1, 110-2, ..., 110-M), wherein the number of health indicators include an indication of whether the anomaly associated with the performance of the wind turbine (110-1, 110-2, ..., 110-M) is due to seasonal variations.

2. The computing device (120) of claim 1, wherein the power residual of the wind turbine (110-1, 110-2, ..., 110-M) at a particular wind speed is a difference between the determined power output of the wind turbine (110-1, 110-2, ..., 110-M) at the particular wind speed and an expected power output of the wind turbine (110-1, 110-2, ..., 110-M) at the particular wind speed provided by the expected power output curve associated with the wind turbine (110-1, 110-2, ..., 110-M).

3. The computing device (120) of claim 1, wherein the number of characteristics associated with the location of the wind turbine (110-1, 110-2, ..., 110-M) include at least one of:

   air temperature at the location;
   air pressure at the location;
   air density at the location;
   altitude of the location; and
   wind direction at the location.

4. The computing device (120) of claim 1, wherein the performance analysis of the wind turbine (110-1, 110-2, ..., 110-M) includes determining whether one or more components of the wind turbine (110-1, 110-2, ..., 110-M) are failing or about to fail.

5. The computing device (120) of claim 1, wherein the processor (122) is configured to execute executable instructions stored in the memory (124) to analyze the performance of the wind turbine (110-1, 110-2, ..., 110-M) by performing a statistical analysis of the adjusted power residuals.

6. The computing device (120) of claim 1, wherein the expected power output curve associated with the wind turbine (110-1, 110-2, ..., 110-M) is based on a number of expected power outputs associated with the wind turbine (110-1, 110-2, ..., 110-M) at a number of wind speeds and a particular air density.

**7.** The computing device (120) of claim 1, wherein the performance analysis of the wind turbine (110-1, 110-2, ..., 110-M) includes generating a number of condition indicators that numerically represent the performance of the wind turbine (110-1, 110-2, ..., 110-M).

**8.** The computing device (120) of claim 1, wherein the performance analysis of the wind turbine (110-1, 110-2, ..., 110-M) includes generating a number of health indicators that describe the performance of the wind turbine (110-1, 110-2, ..., 110-M) in words.

**Patentansprüche**

**1.** Datenverarbeitungsvorrichtung (120) zur Überwachung der Windturbinenleistung, umfassend:

einen Speicher (124); und
einen Prozessor (122), der dafür ausgelegt ist, im Speicher (124) abgelegte ausführbare Anweisungen auszuführen zum:

Bestimmen einer Anzahl von Leistungsabgaben einer Windturbine (110-1, 110-2, ..., 110-M) bei einer Anzahl von Windgeschwindigkeiten;
Bestimmen einer mit der Windturbine (110-1, 110-2, .. ., 110-M) verbundenen Kurve der erwarteten Leistungsabgabe durch Bestimmen einer erwarteten Leistungsabgabe der Windturbine (110-1, 110-2, ..., 110-M) bei der Anzahl von Windgeschwindigkeiten wenigstens teilweise basierend auf:

einem Luftdruck an einer Position der Windturbine (110-1, 110-2, ..., 110-M) und einer Lufttemperatur an der Position der Windturbine (110-1, 110-2, ..., 110-m); oder:

einer Höhe der Position der Windturbine (110-1, 110-2, ..., 110-M) und der Lufttemperatur an der Position der Windturbine (110-1, 110-2, ..., 110-M);
Bestimmen einer Anzahl von Leistungsresiduen der Windturbine (110-1, 110-2, ..., 110-M) bei der Anzahl von Windgeschwindigkeiten basierend auf den bestimmten Leistungsabgaben und der Kurve der erwarteten Leistungsabgabe;
Anpassen der Leistungsresiduen basierend auf einer Anzahl von Eigenschaften, die mit der Position der Windturbine (110-1, 110-2, ..., 110-M) verbunden sind;
Analysieren der Leistung der Windturbine (110-1, 110-2, ..., 110-M) basierend auf den angepassten Leistungsresiduen, wobei die Analyse das Bestimmen einer Schiefe und einer Wölbung beinhaltet, die mit den angepassten Leistungsresiduen bei jeder der Anzahl von Windgeschwindigkeiten verbunden ist, um zu bestimmen, ob eine mit der Leistung der Windturbine (110-1, 110-2, ..., 110-M) verbundene Anomalie auf jahreszeitliche Schwankungen zurückgeht; und
Erzeugen und Anzeigen einer mit der Windturbine (110-1, 110-2, ..., 110-M) verbundenen Anzahl von Gesundheitsindikatoren, wobei die Anzahl von Gesundheitsindikatoren eine Anzeige aufweist, ob die mit der Leistung der Windturbine (110-1, 110-2, ..., 110-M) verbundene Anomalie auf jahreszeitliche Schwankungen zurückgeht.

**2.** Datenverarbeitungsvorrichtung (120) nach Anspruch 1, wobei das Leistungsresiduum der Windturbine (110-1, 110-2, ..., 110-M) bei einer speziellen Windgeschwindigkeit eine Differenz zwischen der bestimmten Leistungsabgabe der Windturbine (110-1, 110-2, ..., 110-M) bei der speziellen Windgeschwindigkeit und einer erwarteten Leistungsabgabe der Windturbine (110-1, 110-2, ..., 110-M) bei der speziellen Windgeschwindigkeit ist, die von der mit der Windturbine (110-1, 110-2, ..., 110-M) verbundenen Kurve der erwarteten Leistungsabgabe bereitgestellt wird.

**3.** Datenverarbeitungsvorrichtung (120) nach Anspruch 1, wobei die Anzahl von mit der Position der Windturbine (110-1, 110-2, ..., 110-M) verbundenen Eigenschaften wenigstens eines der folgenden beinhaltet:

Lufttemperatur an der Position;
Luftdruck an der Position;
Luftdichte an der Position;
Höhenlage der Position; und
Windrichtung an der Position.

**4.** Datenverarbeitungsvorrichtung (120) nach Anspruch 1, wobei die Leistungsanalyse der Windturbine (110-1, 110-2, ..., 110-M) das Bestimmen beinhaltet, ob eine oder mehrere Komponenten der Windturbine (110-1, 110-2, ..., 110-M) ausfällt/ausfallen oder in Kürze ausfallen wird/werden.

**5.** Datenverarbeitungsvorrichtung (120) nach Anspruch 1, wobei der Prozessor (122) dafür ausgelegt ist, im Speicher (124) abgelegte ausführbare Anweisungen auszuführen, um die Leistung der Windturbine (110-1, 110-2, ..., 110-M) durch Durchführen einer statistischen Analyse der angepassten Leistungsresiduen zu analysieren.

**6.** Datenverarbeitungsvorrichtung (120) nach Anspruch 1, wobei die mit der Windturbine (110-1, 110-2, ..., 110-M) verbundene Kurve der erwarteten Leistungsabgabe auf einer Anzahl von mit der Windturbine (110-1, 110-2, ..., 110-M) verbundenen erwarteten Leistungsabgaben bei einer Anzahl von Windgeschwindigkeiten und einer speziellen Luftdichte basiert.

**7.** Datenverarbeitungsvorrichtung (120) nach Anspruch 1, wobei die Leistungsanalyse der Windturbine (110-1, 110-2, ..., 110-M) das Erzeugen einer Anzahl von Zustandsindikatoren beinhaltet, die die Leistung der Windturbine (110-1, 110-2, ..., 110-M) zahlenmäßig darstellen.

**8.** Datenverarbeitungsvorrichtung (120) nach Anspruch 1, wobei die Leistungsanalyse der Windturbine (110-1, 110-2, ..., 110-M) das Erzeugen einer Anzahl von Gesundheitsindikatoren beinhaltet, die die Leistung der Windturbine (110-1, 110-2, ..., 110-M) in Worten beschreiben.

**Revendications**

**1.** Dispositif de calcul (120) destiné à surveiller les performances d'éoliennes, comprenant :

une mémoire (124), et
un processeur (122) configuré pour exécuter des instructions exécutables stockées dans la mémoire (124) afin de :

déterminer un certain nombre de valeurs de sortie de puissance d'une éolienne (110-1, 110-2,..., 110-M) à un certains nombre de vitesses du vent,
déterminer une courbe de sortie de puissance attendue associée à l'éolienne (110-1, 110-2,..., 110-M) en déterminant la valeur de sortie de puissance attendue de l'éolienne (110-1, 110-2,..., 110-M) en fonction de ces différentes vitesses du vent sur la base, au moins en partie :

de la pression de l'air au niveau de l'emplacement de l'éolienne (110-1, 110-2,..., 110-M) et de la température de l'air à l'emplacement de l'éolienne (110-1, 110-2,..., 110-M), ou :

de l'altitude de l'emplacement de l'éolienne (110-1, 110-2,..., 110-M) et de la température de l'air à l'emplacement de l'éolienne (110-1, 110-2,..., 110-M),
déterminer un certain nombre de valeurs de résidus de puissance de l'éolienne (110-1, 110-2,..., 110-M) en fonction de ces différentes vitesses du vent sur la base des valeurs de sortie de puissance déterminées et de la courbe de sortie de puissance attendue,
ajuster les résidus de puissance sur la base d'un certain nombre de caractéristiques associées à l'emplacement de l'éolienne (110-1, 110-2,..., 110-M),
analyser les performances de l'éolienne (110-1, 110-2,..., 110-M) sur la base des résidus de puissance ajustés, l'analyse incluant la détermination de l'asymétrie et de l'aplatissement associés aux résidus de puissance ajustés à chacune des différentes vitesses du vent dans le but de déterminer si une anomalie associée aux performances de l'éolienne (110-1, 110-2,..., 110-M) est due à des variations saisonnières, et
générer et afficher un certain nombre d'indicateurs de santé associés à l'éolienne (110-1, 110-2,..., 110-M), les différents indicateurs de santé incluant une indication de ce qu'une anomalie associée aux performances de l'éolienne (110-1, 110-2,..., 110-M) est due à des variations saisonnières.

**2.** Dispositif de calcul (120) selon la revendication 1, dans lequel le résidu de puissance de l'éolienne (110-1, 110-2,..., 110-M) à une vitesse du vent particulière est la différence entre la sortie de puissance déterminée de l'éolienne (110-1, 110-2,..., 110-M) à cette vitesse particulière du vent et une sortie de puissance attendue de l'éolienne (110-1, 110-2,...,

110-M) à cette vitesse du vent particulière procurée par la courbe de sortie de puissance attendue associée à l'éolienne (110-1, 110-2,..., 110-M).

3. Dispositif de calcul (120) selon la revendication 1, dans lequel les différentes caractéristiques associées à l'emplacement de l'éolienne (110-1, 110-2,..., 110-M) inclut au moins l'une parmi :

> la température de l'air à l'emplacement,
> la pression de l'air à l'emplacement,
> la densité de l'air à l'emplacement,
> l'altitude de l'emplacement, et
> la direction du vent à l'emplacement.

4. Dispositif de calcul (120) selon la revendication 1, dans lequel l'analyse de performances de l'éolienne (110-1, 110-2,..., 110-M) inclut la détermination de ce qu'un ou plusieurs composants de l'éolienne (110-1, 110-2,..., 110-M) sont défaillants ou sur le point d'entrer en défaut.

5. Dispositif de calcul (120) selon la revendication 1, dans lequel le processeur (122) est configuré pour exécuter les instructions exécutables stockées dans la mémoire (124) dans le but d'analyser les performances de l'éolienne (110-1, 110-2,..., 110-M) en effectuant une analyse statistique des résidus de puissance ajustés.

6. Dispositif de calcul (120) selon la revendication 1, dans lequel la courbe de sortie de puissance attendue associée à l'éolienne (110-1, 110-2,..., 110-M) est fondée sur un certain nombre de valeurs de sortie de puissance associées à l'éolienne (110-1, 110-2,..., 110-M) pour un certain nombre de vitesses du vent et pour une densité particulière de l'air.

7. Dispositif de calcul (120) selon la revendication 1, dans lequel l'analyse de performances de l'éolienne (110-1, 110-2,..., 110-M) inclut la génération d'un certain nombre d'indicateurs d'état qui représentent numériquement les performances de l'éolienne (110-1, 110-2,..., 110-M).

8. Dispositif de calcul (120) selon la revendication 1, dans lequel l'analyse de performances de l'éolienne (110-1, 110-2,..., 110-M) inclut la génération d'un certain nombre d'indicateurs de santé qui décrivent par des mots les performances de l'éolienne (110-1, 110-2,..., 110-M).

100

110-1    110-2    • • •    110-M

SENSOR    SENSOR    SENSOR
112-1    112-2    112-N

120

COMPUTING
DEVICE

PROCESSOR    122

MEMORY    124

USER
INTERFACE    126

*Fig. 1*

201 ⟶

230

DETERMINING A NUMBER OF POWER OUTPUTS OF A WIND TURBINE
AT A NUMBER OF DIFFERENT WIND SPEEDS

232

DETERMINING A NUMBER OF POWER RESIDUALS OF THE WIND TURBINE
AT THE NUMBER OF WIND SPEEDS BASED ON THE DETERMINED POWER
OUTPUTS AND A PRE-DETERMINED EXPECTED POWER OUTPUT CURVE
ASSOCIATED WITH THE WIND TURBINE

234

ADJUSTING THE POWER RESIDUALS BASED ON A NUMBER OF
CHARACTERISTICS ASSOCIATED WITH A LOCATION
OF THE WIND TURBINE

236

ANALYZING PERFORMANCE OF THE WIND TURBINE
BASED ON THE ADJUSTED POWER RESIDUALS

238

PROVIDING THE PERFORMANCE ANALYSIS TO A USER

*Fig. 2*

302 ⟍

```
                                                              ┌─350
┌────────────────────────────────────────────────────────────┐
│          DETERMINING AN EXPECTED POWER OUTPUT CURVE          │
│             ASSOCIATED WITH A WIND TURBINE                   │
└────────────────────────────────────────────────────────────┘
                              │
                                                              ┌─352
┌────────────────────────────────────────────────────────────┐
│   DETERMINING A NUMBER OF POWER OUTPUTS OF THE WIND TURBINE  │
│          AT A NUMBER OF DIFFERENT WIND SPEEDS                │
└────────────────────────────────────────────────────────────┘
                              │
                                                              ┌─354
┌────────────────────────────────────────────────────────────┐
│  DETERMINING A NUMBER OF POWER RESIDUALS OF THE WIND TURBINE │
│            AT THE NUMBER OF WIND SPEEDS BY                   │
│         COMPARING THE DETERMINED POWER OUTPUTS TO            │
│       THE DETERMINED EXPECTED POWER OUTPUT CURVE             │
└────────────────────────────────────────────────────────────┘
                              │
                                                              ┌─356
┌────────────────────────────────────────────────────────────┐
│   ADJUSTING THE POWER RESIDUALS TO ACCOUNT FOR A NUMBER      │
│     OF CHARACTERISTICS ASSOCIATED WITH A LOCATION OF         │
│                  THE WIND TURBINE                            │
└────────────────────────────────────────────────────────────┘
                              │
                                                              ┌─358
┌────────────────────────────────────────────────────────────┐
│         ANALYZING PERFORMANCE OF THE WIND TURBINE           │
│            BASED ON THE ADJUSTED POWER RESIDUALS            │
└────────────────────────────────────────────────────────────┘
                              │
                                                              ┌─360
┌────────────────────────────────────────────────────────────┐
│         PROVIDING THE PERFORMANCE ANALYSIS TO A USER        │
└────────────────────────────────────────────────────────────┘
```

*Fig. 3*

**EP 2 514 969 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011020122 A1